# EUROPÄISCHE PATENTSCHRIFT

(11) **EP 2 561 504 B1**
(45) Veröffentlichungstag und Bekanntmachung des Hinweises auf die Patenterteilung: **26.03.2014**
(21) Anmeldenummer: 11718927.4
(22) Anmeldetag: 05.04.2011
(51) Int. Cl.: G09F 19/22, G09F 13/22, G09F 13/18, G09F 13/00

(54) **BELEUCHTETE FASSADE**
ILLUMINATED FACADE
FAÇADE ILLUMINÉE

(30) Priorität: 21.04.2010 DE 202010005265 U
(43) Veröffentlichungstag der Anmeldung: 27.02.2013
(73) Patentinhaber: Loboda, Arvid Thorwald, 46514 Schermbeck (DE)
(72) Erfinder: LOBODA, Arvid, 46514 Schermbeck (DE)
(74) Vertreter: Habbel, Ludwig
(86) Internationale Anmeldenummer: PCT/DE2011/075065
(87) Internationale Veröffentlichungsnummer: WO 2011/131181

(56) Entgegenhaltungen:
- DE-A1-102008 024 822
- DE-U1- 29 712 566
- JP-A- 2 100 087
- JP-A- 6 346 606

## Beschreibung

Die Erfindung betrifft eine Gebäudefassade nach dem Oberbegriff des Anspruchs 1.

Eine derartige Gebäudefassade ist aus der WO 2009/003651 A2 bekannt. Hinter äußeren bzw. vorderen Fassadenplatten aus Glas ist eine Vielzahl von Leuchtmitteln flächig verteilt angeordnet, wobei die Leuchtmittel die individuell angesteuert werden können, so dass sich matrixartig Bilder erzeugen lassen und die Gebäudefassade dementsprechend als Multimediafassade bezeichnet wird. Der Installationsaufwand für eine derartige Gebäudefassade ist hoch.

Aus der Praxis sind weiterhin Gebäudefassaden bekannt, bei denen die Fassadenplatten aus Glas gefertigt und vollflächig verklebt sind, so dass die Revision derartiger Fassaden erhebliche Probleme bereitet.

Aus der Praxis sind weiterhin Gebäudefassaden bekannt, welche mit beleuchteter Werbung in Form von Schriftzügen oder Grafiken versehen sind. Diese beleuchtete Werbung ist in Form von Leuchtkästen ausgestaltet, also Kästen, die vor den Fassadenplatten der Gebäudefassade montiert sind und innen beleuchtet sind. Die gewünschte Darstellung kann entweder an der Rückwand des Leuchtkastens vorgesehen und von vorn beleuchtet sein, wobei in diesen Fällen der Leuchtkasten eine transparente Frontplatte aufweist, oder die gewünschte Darstellung kann an der Frontplatte des Leuchtkastens vorgesehen und aus dem Inneren des Kastens hinterleuchtet sein. Falls eine große Darstellung vorgesehen ist, können die Logos, Schriften oder dergleichen auch jeweils als ein eigener Leuchtkasten ausgestaltet sein, der Leuchtkasten also die Form eines Buchstabens, Schriftzugs oder Logos aufweisen.

Aus der DE 10 2008 024 822 A1 ist eine Leuchtvorrichtung bekannt, die zur Gestaltung eine Gebäudefassade verwendet werden kann, wobei nicht die Befestigung der Leuchtvorrichtung an der Haltekonstruktion der Gebäudefassade vorgeschlagen wird, sondern vielmehr die direkte Befestigung der Leuchtvorrichtung an einer Gebäudewand. Am Rand einer das Licht ausstrahlenden Lichtleitplatte ist eine die Lichtstrahlung verringernde Sperrfläche angeordnet, indem die Lichtleitplatte am Rand von einem U-Profil umfasst ist, welches als teilweise reflektierende Blende wirkt.

Der Erfindung liegt die Aufgabe zugrunde, eine gattungsgemäße Fassade mit möglichst einfachen Mitteln optisch unterschiedlich auszugestalten und einen problemlosen Wechsel der optischen Erscheinungsform zu ermöglichen.

Diese Aufgabe wird durch eine Gebäudefassade mit den Merkmalen des Anspruchs 1 gelöst.

Die Erfindung schlägt mit anderen Worten vor, nicht etwa einen Leuchtkasten bzw. eine separate Leuchtvorrichtung auf eine Gebäudefassade zu montieren, sondern vielmehr die Fassadenplatten selbst von hinten zu durchleuchten. Angesichts der Größe der Fassadenplatten besteht allerdings das Problem, dass zur Erzielung einer gleichmäßig über die Fläche der Fassadenplatte verteilten Helligkeit entweder die Fassadenplatte vollflächig hinterleuchtet werden muss, wie bei einer Multimediafassade, was mit erheblichen Installations- und Betriebskosten verbunden ist, oder dass bei einer Kanteneinstrahlung die von vorn wahrnehmbare Helligkeit zur Mitte der Fassadenplatte hin deutlich abnimmt. Fassadenplatten können Kantenabmessungen von mehr als 1 m aufweisen. Davon ausgehend, dass nach einer Einstrahltiefe von 50 cm kaum noch einen nennenswerte Helligkeit wahrnehmbar ist, sind derartige Fassadenplatten durch eine Kantenbeleuchtung nicht praxisgerecht hinterleuchtbar.

Daher ist vorschlagsgemäß vorgesehen, dass am Rand der Fassadenplatte eine die Lichtstrahlung verringernde Sperrfläche angeordnet ist, und dass vom Rand der Fassadenplatte beabstandet ein lichtdurchlässiger Bereich der Fassadenplatte vorgesehen ist, und dass die Beleuchtungseinrichtung diesen lichtdurchlässigen Bereich durchleuchtend angeordnet ist. Somit lassen sich Schriftzüge, Logos oder geometrische Muster durch eine Durchleuchtung darstellen, ohne dass es zusätzlicher Leuchtkästen bedarf. Dadurch, dass der durchleuchtete Bereich vom Rand der Fassadenplatte beabstandet ist und im Bereich dieses Abstandes die Durchleuchtung der Fassadenplatte gesperrt ist, fällt ein Helligkeitsabfall vom Rand zur Mitte der Fassadenplatte weniger auf, so dass gegebenenfalls auch eine Kantenbeleuchtung der lichtdurchlässigen Fassadenplatte vorgesehen werden kann. Und wenn auf den durchleuchtbaren Flächenanteil der Fassadenplatte begrenzt eine Beleuchtungseinrichtung hinter der Fassadenplatte montiert wird, so ist es vergleichsweise einfach, diese vergleichsweise kleinere Fläche möglichst gleichmäßig auszuleuchten als wenn die gesamte Fassadenplatte gleichmäßig ausgeleuchtet werden soll.

Wenn die Sperrflächen hell wirken, so kann tagsüber auch ohne Einschalten der Beleuchtung die gewünschte grafische Darstellung gut sichtbar präsentiert werden, indem die durchleuchtbaren Bereiche der Fassadenplatten dunkler wirken als die hellen Sperrflächen. Bei Dunkelheit kehrt sich dieser Effekt um, indem die Beleuchtung eingeschaltet wird und die nun durchleuchteten Bereiche heller strahlen als die umgebenden, in der Umgebungsdunkelheit liegenden Sperrflächen, wobei die durchleuchteten Bereiche eventuell durch eine entsprechend farbige Beleuchtung zusätzlich farbig akzentuiert sind.

Ein schneller und unkomplizierter Wechsel der optischen Erscheinung der Fassade kann allein schon dadurch ermöglicht werden, dass die Beleuchtung ein- oder ausgeschaltet wird. Zudem können ggf. unterschiedliche Bereiche der Fassade wahlweise ein- oder ausgeschaltet werden, so dass vertikale oder horizontale sichtbare Strukturen mit Hilfe der Beleuchtung geschaffen werden können, oder es können Beleuchtungskörper unterschiedlicher Farbigkeit vorgesehen werden, so dass durch gezielte Ansteuerung bestimmter Beleuchtungskörper unterschiedliche Farbeffekte in der optischen Erscheinung der Gebäudefassade erzielt werden können. Durch die Sperrflächen werden durchleuchtbare Bereiche der Fassadenplatten frei gelassen, so dass je nach Gestaltung der Sperrflächen die erwähnten Schriftzüge, Logos oder geometrische Muster leuchtend dargestellt werden können. Wenn die Sperrflächen in Form von aufgeklebten, lichtdichten Folien geschaffen werden, lässt sich die Fassadengestaltung nicht nur durch einen Wechsel der betreffenden Fassadenplatten ändern, sondern durch einen Austausch der Folie, so dass mit minimalem Materialeinsatz ein Wechsel der Fassadengestaltung ermöglicht wird.

Vorschlagsgemäß sind die Fassadenplatten mit mechanischen Haltern an den Profilleisten gehalten, wobei jede Fassadenplatte an wenigstens zwei Profilleisten und mit mehreren derartigen Haltern gehalten ist. Dabei weisen die Halter einen insgesamt etwa H-förmigen Querschnitt auf, der einerseits eine Anlagefläche aufweist, mit welcher die Halter an einem Hintergrund gehalten sind, beispielsweise an einer der aufrechten Profilleisten. In dieser Anlagefläche ist eine Bohrung vorgesehen, so dass an dieser Stelle der Halter an den Untergrund, beispielsweise die erwähnte Profilleiste, angeschraubt werden kann. Abgesehen von dieser Anlagefläche weist der Halter einen etwa T-förmigen Abschnitt auf, der aus einem Steg und zwei Haltearmen gebildet ist. Der Steg schafft dabei einen Abstand der Haltearme vor der erwähnten Anlagefläche. Es wird ein Aufnahmeraum zwischen der Anlagefläche und den Haltearmen geschaffen, in welchen ein Rand der Fassadenplatte eingebracht werden kann. Auf diese Weise kann sich ein Halter über den Rand der Fassadenplatte und vor die Vorderseite der Fassadenplatte erstrecken und so die Fassadenplatte halten. Auf diese Weise kann von unten nach oben die Montage der Fassadenplatten erfolgen, indem zunächst die Oberkante einer unteren Fassadenplatte von dem entsprechenden Haltearm des Halters übergriffen wird, wobei anschließend eine obere Fassadenplatte auf den Steg des Halters aufgestellt werden kann und dabei von dem nach oben weisenden Haltearm umgriffen ist. Der Steg ist an die Dicke der Fassadenplatten angepasst und schafft einen entsprechenden Abstand der Haltearme zur Anlagefläche.

Vorteilhaft kann vorgesehen sein, dass die Lichtquellen, also die entsprechenden Beleuchtungskörper, zur Erzielung einer möglichst gleichmäßigen Beleuchtungswirkung nicht direkt die Fassadenplatten von hinten beleuchten.

Vielmehr können als eine erste Alternative so genannte Beleuchtungsplatten vorgesehen sein. Es handelt sich dabei um zweite Fassadenplatten, die hinter den ersten bzw. vorderen bzw. weiter von der Außenwand entfernten Fassadenplatten angeordnet sind und das eingestrahlte Licht großflächig verteilen.

Vorteilhaft kann vorgesehen sein, dass die Fassadenplatten im Abstand vor den Beleuchtungsplatten angeordnet sind, so dass durch diesen Abstand eine zusätzliche Vergleichmäßigung bei der Einstrahlung des Lichtes in die Fassadenplatten erzielt wird und so eine möglichst gleichmäßige, vollflächige Ausleuchtung der Fassadenplatten unterstützt wird.

Vorteilhaft kann vorgesehen sein, bestimmte Bereiche der Fassadenplatten gar nicht oder schwächer oder andersfarbig zu beleuchten, also optisch unterschiedlich zu den angrenzenden Flächen zu gestalten. Hierzu können Sperrflächen vorgesehen sein, die den Lichteintritt in die Fassadenplatte behindern. Diese Sperrflächen können beispielsweise in Form von Folien vorgesehen sein, die beispielsweise auf der Rückseite der Fassadenplatte oder auf die Vorderseite der Beleuchtungsplatte geklebt werden, so dass für diese Sperrfläche nicht noch ein eigenes, und eigens an der Haltekonstruktion zu haltendes, Bauelement vorgesehen sein muss. Statt einer aufklebbaren Folie kann auch eine Bedruckung der Beleuchtungs- oder der Fassadenplatte vorgesehen sein. Eine transparent eingefärbte Folie kann durch die unterschiedliche Farbigkeit die unterschiedlich optische Gestaltung der Fassade bewirken, und alternativ dazu kann die Sperrfläche lichtundurchlässig ausgestaltet sein, so dass dementsprechend nur von der Sperrfläche freigelassene Flächenanteile der Fassadenplatte beleuchtet werden.

Vorteilhaft können die Beleuchtungsplatten zwischen zwei benachbarten aufrechten Profilleisten angeordnet sein. Auf diese Weise kann bei einer bereits vorhandenen Gebäudefassade die Beleuchtungsmöglichkeit nachgerüstet werden, indem der Raum genutzt wird, der zwischen den Fassadenplatten und der Gebäudewand vorhanden ist. In diesem Zwischenraum können die Beleuchtungsplatten gehalten werden. Auch wenn keine vorhandene Glasfassade mit derartigen Beleuchtungsplatten nachgerüstet werden soll, vereinfacht die Anordnung der Beleuchtungsplatten zwischen zwei benachbarten Profilleisten die Neukonstruktion einer Gebäudefassade, da ein bisher bestehendes System einer Gebäudefassade unverändert weiter genutzt werden kann und lediglich um die Installation der Beleuchtungsplatten ergänzt wird.

Als eine zweite Alternative, welche eine direkte Durchleuchtung der Fassadenplatten vermeidet, kann vorteilhaft vorgesehen sein, dass im Abstand hinter einer Fassadenplatte - also der vorderen Fassadenplatte oder einer eventuell vorgesehenen zweiten, hinteren, als Beleuchtungsplatte bezeichneten Fassadenplatte ein Reflektor mit einer hellen und matten Oberfläche vorgesehen ist. Zwischen der Fassadenplatte und dem Reflektor ist eine Beleuchtungseinrichtung angeordnet, welche das Licht auf den Reflektor richtet. Dass die Oberfläche des Reflektors als matt bezeichnet ist bedeutet, dass diese Reflektoroberfläche nicht spiegelnd glänzend ist, sondern beispielsweise durch eine helle, matte Beschichtung, z. B. Lackierung oder Folierung, auf einem nahezu beliebigen Werkstoff erzeugt sein kann, oder durch eine Mikro-Profilierung in einer ansonsten blanken Oberfläche erzielt sein kann, beispielsweise durch Ätzen, Sandstrahlen, Schleifen, Prägen oder dergleichen eines ansonsten unbehandelten Materials, z. B eines geeigneten witterungsbeständigen Werkstoffs wie Edelstahl oder Kunststoff.

Eine vorteilhafte Ausgestaltung der Halter kann darin liegen, dass diese keine von außen zugänglichen Befestigungselemente aufweisen, beispielsweise Schraubenköpfe o. dgl. Die Halter werden also zunächst an der Haltekonstruktion der Gebäudefassade befestigt und anschließend durch die Fassadenplatten teilweise verdeckt, wobei die Befestigungselemente durch die Fassadenplatten verdeckt werden und so gegen Verschmutzungen, Beschädigungen und Vandalismus gut geschützt sind. Alternativ kann jedoch die Verwendung so genannter Reparaturhalter vorgesehen sein, die von außen zugängliche Befestigungsmittel aufweisen und im Falle von Reparatur- oder Wartungsarbeiten einen besonders schnellen und problemlosen Zugang zu den Beleuchtungsplatten und der Beleuchtung ermöglichen. Es kann vorgesehen sein, die Reparaturhalter erst ab einer Höhe zu verwenden, die für Passanten unzugänglich ist, und darunter Halter anzubringen, die vandalismussicher sind.

Vorteilhaft können die Beleuchtungsplatten mit Hilfe der gleichen Halter an den Profilleisten gehalten sein, wie die Fassadenplatten selbst, so dass innerhalb der Gebäudefassade ein System mit nur sehr wenigen unterschiedlichen Komponenten Verwendung findet, was die Erstellung der Gebäudefassade erleichtert, das Fehlerrisiko minimiert, und welches zudem wirtschaftlich vorteilhaft ist aufgrund höherer Stückzahlen der einzelnen zu verwendeten Teile und aufgrund der geringeren Anzahl herzustellender unterschiedlicher Teile.

Die Anlagefläche eines Halters ist vorteilhaft größer ausgestaltet als die Haltearme, derart, dass sie sich vom Steg aus weiter erstreckt als es den vergleichbaren Haltearmen entspricht. Auf diese Weise ist es problemlos möglich, die Bohrung in einen Bereich der Anlagefläche vorzusehen, der nicht von einem Haltearm verdeckt ist, so dass eine problemlose Zugänglichkeit der Bohrung und einer dort vorgesehenen Schraube gegeben ist.

Um eine schonende Halterung der Fassadenplatten sicherzustellen, ist an den Haltearmen und am Steg, auf der Fläche, die jeweils einer Fassadenplatte zugewandt ist, eine elastische Dämpfungsschicht vorgesehen, beispielsweise ein dort aufgeklebtes Elastomerkissen, so dass beispielsweise auch Fassadenplatten, die aus Glas bestehen, schonend und zuverlässig geschützt gehalten werden können.

Vorteilhaft können an den Profilleisten Haltewinkel vorgesehen sein, die als separate Bauteile gefertigt sind und die einerseits an der Profilleiste befestigt sind und andererseits, an ihrem anderen Schenkel, die Halter aufnehmen, die zur Befestigung der Beleuchtungsplatten vorgesehen sind. Auf diese Weise kann ein bestehendes Fassadensystem unverändert weiterhin genutzt werden, und im Bedarfsfall auch für die Erstellung einer beleuchteten Fassade genutzt werden, indem mit Hilfe der Haltewinkel die Installation der Beleuchtungsplatten ermöglicht wird.

Eine möglichst gleichmäßige Lichtverteilung kann dadurch erfolgen, dass die Beleuchtungsplatten eine Oberflächenstruktur aufweisen, die das eingestrahlte Licht verteilt. Diese Oberflächenstruktur kann beispielsweise durch punkt- oder linienförmige Einprägungen geschaffen sein, durch eine "gesandete", also aufgeraute Oberfläche oder auf ähnliche Weise, so dass Licht, welches von punktuellen oder linienförmigen Beleuchtungskörpern in die Beleuchtungsplatten eingestrahlt wird, möglichst weit verteilt wird, so dass sich auf diese Weise die Lichteinwirkung von mehreren Beleuchtungskörpern zu einem möglichst gleichmäßig ausgeleuchteten Ergebnis verteilt.

Alternativ zu einer derartigen Oberflächenstruktur oder auch ergänzend zu einer derartigen Oberflächenstruktur kann eine innere Struktur der Beleuchtungsplatten vorgesehen sein, wobei diese innere Struktur der Beleuchtungsplatten das eingestrahlte Licht ebenfalls auf bestimmte Weise verteilt. Derartige innere Strukturänderungen sind beispielsweise mit Hilfe eines Lasers erzielbar, wie dies beispielsweise aus dem Bereich von Dekorationsartikeln, Schlüsselanhängern u. dgl. bekannt ist, wo Motive wie Sternzeichen o. dgl. in einen Körper aus transparentem Material gelasert wird. Mit Hilfe derartiger interner Strukturen kann beispielsweise die Lichtverteilung innerhalb der Beleuchtungsplatte vergleichmäßigt werden, so dass auch in Bereichen, die je nach Anordnung und Anzahl der verwendeten Beleuchtungskörper schwächer ausgeleuchtet werden, die an der Vorderseite der Beleuchtungsplatte austretende Lichtintensität verstärkt werden und somit die Gleichmäßigkeit der Lichtabgabe von der Vorderseite der Beleuchtungsplatte verbessert werden kann.

Alternativ zu einer derart möglichst gleichmäßigen Ausleuchtung der Beleuchtungsplatten kann vorgesehen sein, die erwähnten internen Strukturen derart auszugestalten, dass bewusst Bereiche unterschiedlicher Helligkeit geschaffen werden, so dass auf diese Weise Ornamente, Schriftzüge o. dgl. durch unterschiedlich helle Lichtwirkungen geschaffen werden können.

Vorteilhaft können die Beleuchtungsplatten aus einem lichtdurchlässigen Kunststoff bestehen. Auf diese Weise kann das für die Beleuchtung zusätzliche Gewicht der Gebäudefassade gering gehalten werden, zudem ergibt sich durch die vorgelagerten Fassadenplatten ein hervorragender Schutz der Beleuchtungsplatten gegen UV-Einstrahlung und andere Witterungseinflüsse.

Vorteilhaft können die Fassadenplatten durchgefärbt oder verspiegelt sein, so dass bei ausgeschalteter Beleuchtung die gesamte Fassade - anders als bei der Verwendung von Leuchtkästen - ununterbrochen und einheitlich aussehen kann. Erst nach dem Einschalten der Beleuchtung wird der durchleuchtete, von der Sperrfläche freie Bereich sichtbar, so dass erst dann die gewünschte grafische Gestaltung erkennbar wird. So kann durch Anbringung unterschiedlicher grafischer Gestaltungen an derselben Fassade wahlweise eine bestimmte grafische Gestaltung angezeigt werden, was z. B. an Parkhäusern zur Anzeige genutzt werden kann, ob das Parkhaus vollständig besetzt ist oder noch Aufnahmekapazitäten hat.

Ausführungsbeispiele der Erfindung werden anhand der Zeichnung nachfolgend näher erläutert. Dabei zeigt
- Fig. 1: ausschnittsweise einen Horizontalschnitt durch ein erstes Ausführungsbeispiel einer Gebäudefassade mit Beleuchtungsplatten,
- Fig. 2: eine Seitenansicht auf einen der in der Gebäudefassade verwendeten Halter, und
- Fig. 3: einen Horizontalschnitt ähnlich Fig. 1 durch ein zweites Ausführungsbeispiel einer Gebäudefassade mit einem Reflektor.

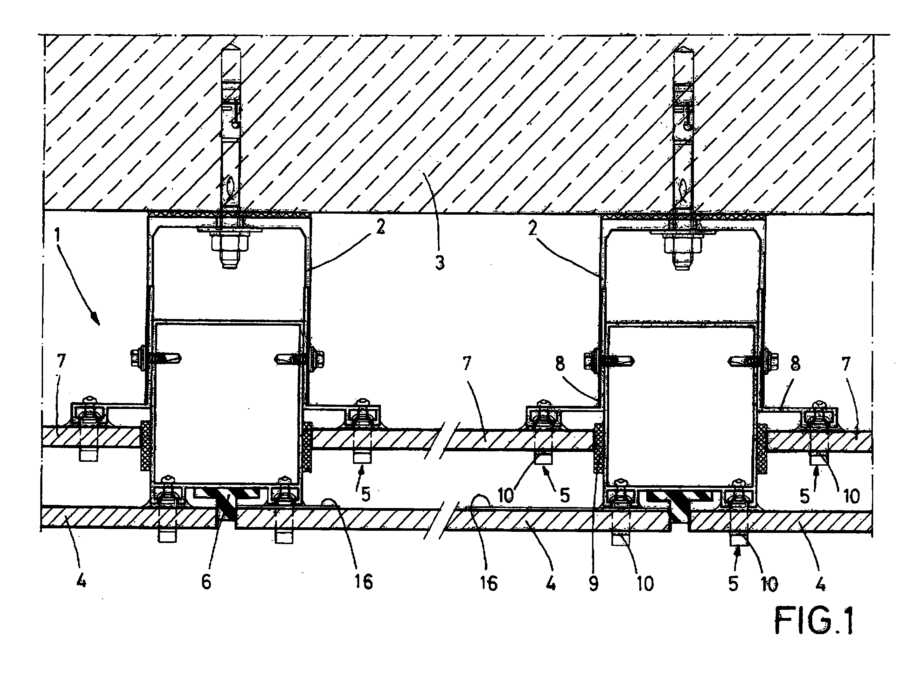

In Fig. 1 ist mit 1 insgesamt eine Gebäudefassade bezeichnet, die senkrechte Profilleisten 2 aufweist, welche an eine Gebäudewand 3 geschraubt sind. Die Profilleisten 2 sind mehrteilig ausgestaltet und weisen vordere, durchgängige Profilabschnitte auf, an denen Fassadenplatten 4 mit Hilfe von Haltern 5 festgelegt sind. Zwischen zwei benachbarten Fassadenplatten 4 befinden sich Dämpfungs- und Dichtungsstreifen 6 aus einem EPDM-Werkstoff.

Im Abstand hinter den Fassadenplatten 4 sind Beleuchtungsplatten 7 vorgesehen, die mit Hilfe von Haltewinkeln 8 an den Profilleisten 2 gehalten sind. Die Haltewinkeln 8 weisen jeweils einen an einer Profilleiste 2 festgelegten Schenkel auf sowie einen zweiten Schenkel, der parallel zu den Fassadenplatten 4 verläuft und die gleichen Befestigungsmöglichkeiten bietet, wie sie auch an den Profilleisten 2 vorgesehen sind, so dass mit gleichartigen Haltern 5, wie sie für die Fassadenplatten 4 verwendet werden, auch die Beleuchtungsplatten 7 gehalten werden können.

Die Einstrahlung von Licht in die Beleuchtungsplatten 7 kann auf mehrere Arten erfolgen, beispielsweise durch hinter den Beleuchtungsplatten 7 angeordnete Beleuchtungskörper, wie beispielsweise LEDs, Glühbirnen, Leuchtstoffröhren o. dgl., oder es können großflächig leuchtende Folien auf die Rückseiten der Beleuchtungsplatten 7 geklebt sein. Bei dem dargestellten Ausführungsbeispiel ist an den umlaufenden Kanten der Beleuchtungsplatten 7 eine Lichteinstrahlung mit Hilfe von LEDs vorgesehen. Zwischen den Beleuchtungsplatten 7 und den Profilleisten 2 sind in der Zeichnung entsprechende Streifen 9 zu erkennen, die einerseits eine mechanische Dämpfung zwischen den Profilleisten 2 und den Beleuchtungsplatten 7 bewirken und hierfür beispielsweise aus einem transparenten Silikonwerkstoff bestehen können. Zudem sind in diesen transparenten Streifen 9 die Beleuchtungskörper in Form mehrerer LEDs eingelassen.

Für die mittlere Fassadenplatte 4 ist eine lediglich bereichsweise Durchleuchtung vorgesehen. Auf der Rückseite der Fassadenplatte 4 ist daher eine als Lackschicht oder als Folie ausgestaltete Sperrfläche 16 vorgesehen, welche eine reduzierte Lichtdurchlässigkeit aufweist oder sogar vollkommen lichtundurchlässig ist. Die Sperrfläche 16 erstreckt sich jeweils vom Rand der Fassadenplatte 4 aus zu deren Mitte, wobei rein beispielhaft dargestellt ist, dass sie am linken Rand der Fassadenplatte 4 schmaler ist als am rechten Rand der Fassadenplatte 4, weil dies beispielsweise dem Verlauf eines Schriftzugs oder eines Musters entspricht, so dass ein durchleuchtbarer Bereich der Fassadenplatte 4 von der Sperrfläche 16 frei bleibt, welcher diesen Schriftzug oder dieses Muster ergibt.

Abweichend von dem dargestellten Ausführungsbeispiel kann die Sperrfläche auch an anderer Stelle vorgesehen sein, beispielsweise auf der Vorderseite der vorderen Fassadenplatte 4 oder der hinteren, als Beleuchtungsplatte 7 bezeichneten Fassadenplatte.

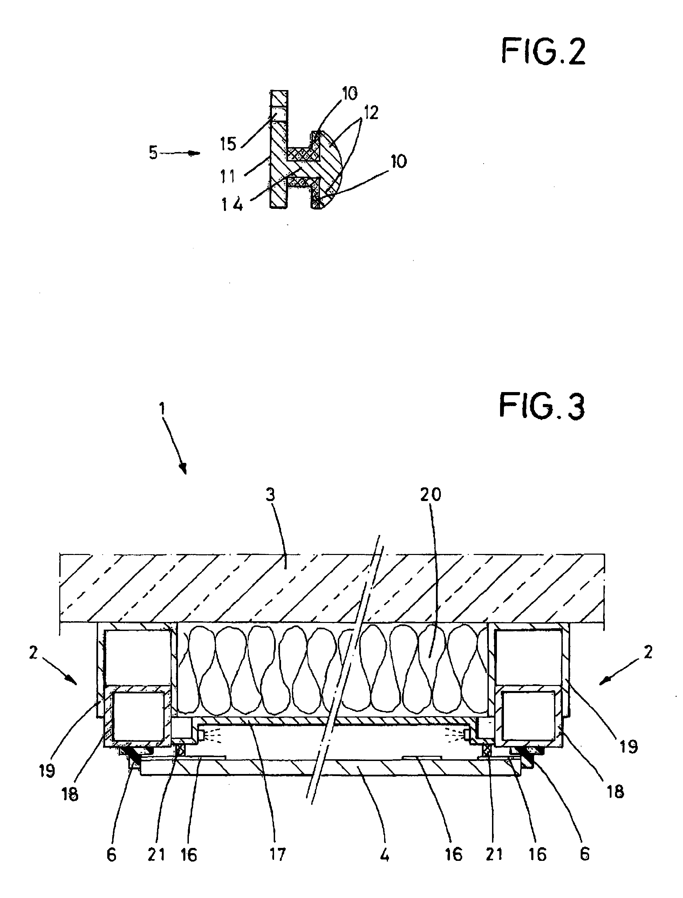

Wie aus Fig. 2 näher ersichtlich ist, weisen auch die Halter 5 Dämpfungselemente auf, nämlich Dämpfungskissen 10, die auf der Rückseite von Haltearmen 12 sowie auf einem Steg 14 des Halters 5 vorgesehen sind. Der Halter 5 weist einen im Wesentlichen H-förmigen Querschnitt auf und eine hintere Anlagefläche 11, die vorderen Haltearme 12, und den die Haltearme 12 mit der Anlagefläche 11 verbindenden Steg 14.

Die Anlagefläche 11 erstreckt sich über den oberen Haltearm 12 hinaus nach oben und weist in diesem überstehenden Bereich eine Bohrung 15 auf, welche die Befestigung des Halters 5 an einem Hintergrund ermöglicht. Das obere Dämpfungskissen 10 ist auf dem Steg 14 dicker als am Haltearm 12 und als das untere Dämpfungskissen 10, so dass für eine auf diesem oberen Dämpfungskissen 10 aufstehende und das Dämpfungskissen 10 mit ihrem Eigengewicht belastende Fassadenplatte 4 oder Beleuchtungsplatte 7 eine ausreichende Dämpfungswirkung sichergestellt ist.

Abweichend von der in Fig. 2 dargestellten Ausführungsform eines Halters 5 können so genannte Reparaturklammern oder Reparaturhalter vorgesehen sein. Diese können entfernt werden, ohne dass zuvor eine Fassadenplatte 4 entfernt werden müsste, beispielsweise um einen Zugang zur Bohrung 15 freizugeben. Solche in Fig. 2 nicht dargestellten Reparaturhalter werden ansonsten beispielsweise eingesetzt, wenn in der Mitte einer Gebäudefassade eine einzelne Fassadenplatte ausgetauscht werden soll. Sie können bei einer beleuchteten Fassade durchgängig Verwendung finden, um auf diese Weise durch das Abnehmen einer bestimmten Fassadenplatte 4 den problemlosen und schnellen Zugang zu der dahinterliegenden Beleuchtungsplatte 7 zu schaffen, beispielsweise, wenn dort die Reparatur der Beleuchtungskörper erforderlich wird.

Fig. 3 zeigt eine Gebäudefassade 1 mit einem Reflektor 17, deren Aufbau wesentlich vereinfachter dargestellt ist als in Fig. 1, die jedoch grundsätzlich wie in Fig. 1 dargestellt aufgebaut ist, also Profilleisten 2 aufweist, welche aus vertikalen Pfosten 18 und U-förmigen Haltern 19 gebildet sind, wobei die Pfosten 18 mittels der Halter 19 an der Gebäudewand 3 befestigt sind. Die Fassadenplatten 4 sind voneinander durch die Dämpfungs- und Dichtstreifen 6 getrennt und in einem solchen Abstand vor der Gebäudewand 3 befestigt, dass eine hinterlüftete Fassade geschaffen wird, deren Abstand die Anordnung einer Dämmschicht 20 vor der Gebäudewand 3 ermöglicht, wie dies auch bei der Gebäudefassade 1 von Fig. 1 möglich ist.

Im Unterschied zum Ausführungsbeispiel der Fig. 1 sind gemäß Fig. 3 nicht zwei Fassadenplatten 4 und 7 hintereinander vorgesehen. Eine indirekte Durchleuchtung der Fassadenplatte 4 wird vielmehr mittels des hinter der Fassadenplatte 4 angeordneten Reflektors 17 bewirkt.

Der Reflektor 17 ist als mehrfach gekantete Blechtafel ausgestaltet, welche auf ihrer zur Fassadenplatte 4 weisenden Oberfläche mattweiß lackiert ist. An ihren zur Fassadenplatte 4 hin abgewinkelten umlaufenden vier Kanten ist eine Mehrzahl von Beleuchtungskörpern vorgesehen, welche die Reflektorfläche beleuchten. Die Beleuchtungskörper sind zu handelsüblichen LED-Streifen zusammengefasst, so dass eine schnelle Montage begünstigt wird. Zwischen der Fassadenplatte 4 und dem Reflektor 17 ist ein umlaufendes Dichtungsprofil 21 vorgesehen, so dass erstens das Eindringen von Insekten oder Verschmutzungen in den haubenförmigen Reflektor 17 verhindert wird, zweitens ein direkter mechanischer Kontakt zwischen dem metallischen Reflektor 17 und der aus Glas oder Kunststoff bestehenden Fassadenplatte 4 zu deren Schutz vermieden wird, und drittens unerwünschtes Streulicht vermieden wird, welches ansonsten zwischen dem Reflektor 17 und der Fassadenplatte 4 seitlich austreten könnte.

Anders als bei dem dargestellten Ausführungsbeispiel kann vorgesehen sein, die Größe des Reflektors 17 deutlich kleiner als die Fassadenplatte 4 zu bemessen, nämlich in Anpassung an die Abmessungen des von der Sperrfläche freien, durchleuchtbaren Bereichs der Fassadenplatte 4.

## Patentansprüche

1. Gebäudefassade (1), welche als hinterlüftete Fassade eine Außenwand eines Gebäudes außen verkleidet,
mit einer aufrechte Pfosten (18) und liegende Riegel aufweisenden Haltekonstruktion,
und mit einer von der Haltekonstruktion getragenen, aus einem lichtdurchlässigen Material bestehenden Fassadenplatte (4),
wobei hinter der Vorderseite der Fassadenplatte (4) eine Beleuchtungseinrichtung vorgesehen ist,
**dadurch gekennzeichnet,**
**dass** am Rand der Fassadenplatte (4) eine die Lichtstrahlung verringernde Sperrfläche (16) angeordnet ist,
und **dass** vom Rand der Fassadenplatte (4) beabstandet ein lichtdurchlässiger Bereich der Fassadenplatte (4) vorgesehen ist,
und **dass** die Beleuchtungseinrichtung diesen lichtdurchlässigen Bereich durchleuchtend angeordnet ist,
jede Fassadenplatte (4) mittels mehrerer mechanischer Halter (5) an wenigstens zwei Profilleisten (2) gehalten ist, und dass die Halter (5) einen H-förmigen Querschnitt aufweisen, mit einer Anlagefläche (11), die eine Bohrung (15) aufweist, zwei Haltearmen (12), die im Abstand vor der Anlagefläche (11) verlaufen, und mit einem Steg (14), der sich zwischen der Anlagefläche (11) und den Haltearmen (12) erstreckt.

2. Gebäudefassade nach Anspruch 1,
**dadurch gekennzeichnet,**
**dass** zwei lichtdurchlässige Fassadenplatten (4) hintereinander angeordnet sind, von denen eine die Sperrfläche aufweist,
wobei die vordere, äußere, von der Außenwand weiter beabstandete, als Schutzplatte und die hintere als Beleuchtungsplatte (7) bezeichnet ist, welche ebenfalls aus einem lichtdurchlässigen Material bestehen und in welche durch Beleuchtungskörper Licht eingeleitet ist.

3. Gebäudefassade nach Anspruch 2,
**dadurch gekennzeichnet,**
**dass** die vordere Fassadenplatte (4) im Abstand vor der Beleuchtungsplatte (7) angeordnet ist.

4. Gebäudefassade nach einem der vorhergehenden Ansprüche,
**dadurch gekennzeichnet,**
**dass** die Beleuchtungsplatten (7) aus einem lichtdurchlässigen Kunststoff bestehen.

5. Gebäudefassade nach einem der vorhergehenden Ansprüche,
**dadurch gekennzeichnet,**
**dass** die Beleuchtungsplatten (7) zwischen zwei benachbarten aufrechten Profilleisten (2) angeordnet sind.

6. Gebäudefassade nach einem der vorhergehenden Ansprüche,
**dadurch gekennzeichnet,**
**dass** im Abstand hinter einer Fassadenplatte (4, 7) ein Reflektor mit einer hellen, matten Oberfläche vorgesehen ist, wobei zwischen der Fassadenplatte (4, 7) und dem Reflektor eine das Licht auf den Reflektor richtende Beleuchtungseinrichtung angeordnet ist.

7. Gebäudefassade nach einem der vorhergehenden Ansprüche,
**dadurch gekennzeichnet,**
**dass** die Halter (5) jeweils einen T-förmigen Abschnitt aufweisen, mit einem Steg (14) und zwei sich davon weg erstreckenden Haltearmen (12),
wobei die Halter (5) derart außerhalb der Fassadenplatten (4) angeordnet sind, dass sie mit einem ersten Haltearm (12) den oberen Rand einer unteren Fassadenplatte (4) und mit einem zweiten Haltearm (12) den unteren Rand einer oberen Fassadenplatte (4) übergreifen.

8. Gebäudefassade nach einem der vorhergehenden Ansprüche,
**dadurch gekennzeichnet,**
**dass** die Beleuchtungsplatten (7) mittels gleichartiger Halter (5) an den Profilleisten (2) gehalten sind wie die vorderen Fassadenplatten (4).

9. Gebäudefassade nach einem der vorhergehenden Ansprüche,
**dadurch gekennzeichnet,**
**dass** die Anlagefläche (11) sich dort, wo die Bohrung (15) vorgesehen ist, weiter vom Steg (14) weg erstreckt als die am anderen Ende des Stegs (14) vorgesehenen Haltearme (12).

10. Gebäudefassade nach einem der vorhergehenden Ansprüche,
**dadurch gekennzeichnet,**
**dass** an den Haltearmen (12) und am Steg (14), auf der einer Beleuchtungsplatte (7) oder Fassadenplatte (4) zugewandten Fläche, ein elastisches Dämpfungselement vorgesehen ist.

11. Gebäudefassade nach einem der vorhergehenden Ansprüche,
**dadurch gekennzeichnet,**
**dass** an den Profilleisten (2) Haltewinkel (8) vorgesehen sind, die einerseits an den Profilleisten (2) befestigt sind und andererseits Halter (5) aufnehmen, welche die Beleuchtungsplatten (7) halten.

12. Gebäudefassade nach einem der vorhergehenden Ansprüche,
**dadurch gekennzeichnet,**
**dass** die Fassadenplatten (4, 7) eine das eingestrahlte Licht verteilende Oberflächenstruktur aufweisen.

13. Gebäudefassade nach einem der vorhergehenden Ansprüche,
**dadurch gekennzeichnet,**
**dass** die Fassadenplatten (4, 7) eine das eingestrahlte Licht verteilende interne Struktur aufweisen.

## Claims

1. Building facade (1) which, as a rear-ventilated facade, covers the outside of the external wall of a building, with a retaining structure comprising upright posts (18) and horizontal bars, and a facade panel (4) made of translucent material supported by the retaining structure, where a lighting device is provided behind the front side of the facade panel (4),
**characterised in that** a blocking surface (16) for reducing the light radiation is arranged at the edge of the facade panel (4), and that a translucent area of the facade panel (4) is provided at a distance from the edge of the facade panel (4), and that the lighting device is arranged to shine through this translucent area, (that) each facade panel (4) is held in position by several mechanical retainers (5) on at least two profile strips (2) and that the retainers (5) have an H-shaped cross section with a contact surface (11) with a hole (15), two retaining arms (12) running at a distance in front of the contact surface (11), and with a ridge (14) extending between the contact surface (11) and the retaining arms (12).

2. Building facade in accordance with claim 1, **characterised in that** two translucent facade panels (4) are arranged behind one another, of which one has the blocking surface, where the front outer panel at a greater distance from the outer wall, is described as the protective panel, and the rear panel as the lighting panel (7), which also consist of a translucent material, and into which light is passed by lighting fixtures.

3. Building facade in accordance with claim 2, **characterised in that** the front facade panel (4) is arranged at a distance in front of the lighting panel (7).

4. Building facade in accordance with any of the aforementioned claims, **characterised in that** the lighting panels (7) consist of a translucent plastic material.

5. Building facade in accordance with any of the aforementioned claims, **characterised in that** the lighting panels (7) are arranged between two adjacent upright profile strips (2).

6. Building facade in accordance with any of the aforementioned claims, **characterised in that** a reflector with a bright matt surface is provided at a distance behind a facade panel (4, 7), where a lighting device is arranged between the facade panel (4, 7) and the reflector, which directs the light at the reflector.

7. Building facade in accordance with any of the aforementioned claims, **characterised in that** each of the retainers (5) has a T-shaped section with a ridge (14) and two retaining arms (12) extending away from it, where the retainers (5) are arranged outside the facade panels (4) in such a way that a first retaining arm (12) hooks over the upper edge of a lower facade panel (4) and a second retaining arm (12) hooks over the lower edge of an upper facade panel (4).

8. Building facade in accordance with any of the aforementioned claims, **characterised in that** the lighting panels (7) are held against the profile strips (2) by retainers (5) of the same type as the front facade panels (4).

9. Building facade in accordance with any of the aforementioned claims, **characterised in that** the contact surface (11) extends further away from the ridge (14) at the point where the hole (15) is provided, than the retaining arms (12) provided at the other end of the ridge (14).

10. Building facade in accordance with any of the aforementioned claims, **characterised in that** an elastic damping element is provided on the retaining arms (12) and on the ridge on a surface facing a lighting panel (7) or a facade panel (4).

11. Building facade in accordance with any of the aforementioned claims, **characterised in that** retaining brackets (8) are provided on the profile strips (2), which, on the one side, are attached to the profile strips (2), and on the other, hold the retainers (5) which retain the lighting panels (7).

12. Building facade in accordance with any of the aforementioned claims, **characterised in that** the facade panels (4, 7) have a surface structure which distributes the light beamed onto it.

13. Building facade in accordance with any of the aforementioned claims, **characterised in that** the facade panels (4, 7) have an internal structure which distributes the light beamed onto it.

## Revendications

1. Façade (1) de bâtiment qui en tant que façade ventilée par derrière habille un mur extérieur d'un bâtiment, comprenant une structure de retenue présentant des montants verticaux (18) et des montants horizontaux, et comprenant une plaque (4) de façade soutenue par la structure de retenue et composée d'un matériau perméable à la lumière, sachant qu'au dos du côté avant de la plaque (4) de façade a été prévu un équipement d'éclairage,
**caractérisée en ce que** sur le bord de la plaque (4) de façade est agencée une surface de barrage (16) restreignant le rayonnement lumineux, et **en ce qu'**à une certaine distance du bord de la plaque (4) de façade se trouve une zone, sur la plaque (4) de façade, perméable à la lumière, et **en ce que** l'équipement d'éclairage est agencé pour illuminer à travers cette zone perméable à la lumière, **en ce que** chaque plaque (4) de façade est retenue par au moins deux bandeaux profilés (2) au moyen de plusieurs supports (5) mécaniques et **en ce que** les supports (5) présentent une section en H avec une surface d'applique (11) présentant un alésage (15), deux bras de retenue (12) au tracé distant de la surface d'applique (11) et comprenant une nervure (14) qui s'étend entre la surface d'applique (11) et les bras de retenue (12).

2. Façade de bâtiment selon la revendication 1, **caractérisée en ce que** deux plaques (4) de façade sont agencées l'une derrière l'autre, dont une présente une surface de barrage, sachant que la plaque avant extérieure située à une plus grande distance du mur extérieur est désignée plaque de protection, et que la plaque arrière est désignée plaque d'éclairage (7), composées également d'un matériau perméable à la lumière et traversées par la lumières de corps lumineux.

3. Façade de bâtiment selon la revendication 2, **caractérisée en ce que** la plaque (4) avant de façade est agencée à distance devant la plaque d'éclairage (7).

4. Façade de bâtiment selon l'une des revendications précédentes, **caractérisée en ce que** les plaques d'éclairage (7) consistent en une matière plastique perméable à la lumière.

5. Façade de bâtiment selon l'une des revendications précédentes, **caractérisée en ce que** les plaques d'éclairage (7) sont agencées entre deux bandeaux profilés (2) verticaux voisins.

6. Façade de bâtiment selon l'une des revendications précédentes, **caractérisée en ce qu'**à une certaine distance derrière une plaque (4, 7) de façade est prévu un réflecteur à surface mate claire, sachant qu'entre la plaque (4, 7) de façade et le réflecteur est agencé un équipement d'éclairage dirigeant l'éclairage sur le réflecteur.

7. Façade de bâtiment selon l'une des revendications précédentes, **caractérisée en ce que** les supports (5) présentent respectivement un segment en T avec une nervure (14) et deux bras de retenue (12) partant de là, sachant que les supports (5) sont agencés en dehors des plaques (4) de façade de sorte à recouvrir, avec un premier bras de retenue (12), le bord supérieur d'une plaque (4) de façade inférieure et, avec un second bras de retenue (12), le bord inférieur d'une plaque (4) de façade supérieure.

8. Façade de bâtiment selon l'une des revendications précédentes, **caractérisée en ce que** les plaques d'éclairage (7) sont retenues contre les bandeaux profilés (2) par des supports (5) du même type que pour les plaques (4) de façade avant.

9. Façade de bâtiment selon l'une des revendications précédentes, **caractérisée en ce que** la surface d'applique (11) s'étend, là où l'alésage (15) est prévu, plus loin au-delà de la nervure (14) que les bras de retenue (12) prévus à l'autre extrémité de la nervure (14).

10. Façade de bâtiment selon l'une des revendications précédentes, **caractérisée en ce que** sur les bras de retenue (12) et sur la nervure (14), un élément amortisseur élastique est prévu sur la surface regardant une plaque d'éclairage (7) ou une plaque de façade (4).

11. Façade de bâtiment selon l'une des revendications précédentes, **caractérisée en ce que** sur les bandeaux profilés (2) sont prévues des cornières de retenue (8) qui d'un côté sont fixées contre des bandeaux profilés (2) et de l'autre reçoivent des supports (5) qui retiennent les plaques d'éclairage (7).

12. Façade de bâtiment selon l'une des revendications précédentes, **caractérisée en ce que** les plaques (4, 7) de façade présentent une structure superficielle qui répartit les rayons de lumière entrants.

13. Façade de bâtiment selon l'une des revendications précédentes, **caractérisée en ce que** les plaques (4, 7) de façade présentent une structure interne qui répartit les rayons de lumière entrants.
